# EUROPÄISCHE PATENTSCHRIFT

(11) **EP 3 947 109 B1**
(45) Veröffentlichungstag und Bekanntmachung des Hinweises auf die Patenterteilung: **10.07.2024**
(21) Anmeldenummer: 20718196.7
(22) Anmeldetag: 27.03.2020
(51) Int. Cl.: B62D 6/00, B62D 6/08

(54) **VERFAHREN ZUR STEUERUNG EINES STEER-BY-WIRE-LENKSYSTEMS UND STEER-BY-WIRE-LENKSYSTEM FÜR EIN KRAFTFAHRZEUG**
METHOD FOR CONTROLLING A STEER-BY-WIRE STEERING SYSTEM AND STEER-BY-WIRE STEERING SYSTEM FOR A MOTOR VEHICLE
PROCÉDÉ DE COMMANDE D'UN SYSTÈME DE DIRECTION À COMMANDE PAR CÂBLE ET SYSTÈME DE DIRECTION À COMMANDE PAR CÂBLE POUR UN VÉHICULE À MOTEUR

(30) Priorität: 04.04.2019 DE 102019204857
(43) Veröffentlichungstag der Anmeldung: 09.02.2022
(73) Patentinhaber: thyssenkrupp Presta AG, 9492 Eschen (LI); thyssenkrupp AG, 45143 Essen (DE)
(72) Erfinder: DÄHLER, Marco, 9000 St. Gallen (CH)
(74) Vertreter: thyssenkrupp Intellectual Property GmbH
(86) Internationale Anmeldenummer: PCT/EP2020/058660
(87) Internationale Veröffentlichungsnummer: WO 2020/201059

(56) Entgegenhaltungen:
- EP-A2- 1 609 696
- DE-A1- 102004 001 318
- DE-A1- 102004 026 147
- DE-A1- 102005 058 200
- DE-A1- 19 801 974

## Beschreibung

Die Erfindung betrifft ein Verfahren zur Steuerung eines Steer-by-Wire-Lenksystems nach dem Oberbegriff des Anspruchs 1 und ein Steer-by-Wire-Lenksystem für ein Kraftfahrzeug nach dem Oberbegriff des Anspruchs 10.

In Steer-by-Wire-Lenksystemen für Kraftfahrzeuge besteht keine mechanische Verbindung mehr zwischen einem vom Fahrer bedienten Lenkrad - der Lenkhandhabe - und den gelenkten Rädern. Stattdessen wird die Stellung der gelenkten Räder durch einen elektronisch geregelten Lenksteller eingestellt, um das Fahrzeug auf der gewünschten Bahn zu führen. Zu diesem Zweck stellt ein mit der Lenkwelle verbundener Lenkwellensensor ein Sollstellungssignal bereit, das die Lenkabsicht des Fahrers repräsentiert. Der Lenksteller wird dann über einen Stellungsregler mit ausreichender Leistung und Bandbreite derart mit einem Drehmoment-Anforderungssignal angesteuert, dass die gelenkten Räder in die Sollstellung eingeregelt werden. Dabei ist es wünschenswert, dass die Regelung des Lenksystems derart erfolgt, dass dem Fahrer ein vertrautes Lenkgefühl bereitgestellt wird.

Bei herkömmlichen Lenkungen hat der Lenkungsstrang eine bestimmte Steifigkeit. Diese setzt sich im Wesentlichen zusammen aus der Lenkwelle, dem Drehstab und einigen weiteren Steifigkeiten. In einem Steer-by-Wire-Lenksystem ist die Lenkungssteifigkeit technisch bedingt dagegen sehr steif, da die mechanischen Elemente, die wesentlich zu einer reduzierten Steifigkeit führen, nicht vorhanden sind.

Aus US 2018/0079447 A1 ist eine Regelung für ein Steer-by-Wire-Lenksystem bekannt, bei der das Lenksystem den Fahrer davon abhält, das Lenkrad über einen virtuellen Lenkanschlag hinaus zu bewegen. Nachteilig für das Empfinden des Fahrers ist jedoch, dass dieses Lenksystem auf ein Lenken des Fahrers deutlich schneller anspricht als konventionelle Lenksysteme, da keine mechanischen Elemente vorhanden sind, die zu einer reduzierten Steifigkeit der Lenksäule führen und dadurch die Übertragung des Fahrerlenkwunsches auf die gelenkten Räder beeinträchtigen.

EP 1 609 696 A2 beschreibt ein Steer-by-Wire-System, das mit einem vom Fahrer betätigten Lenkrad versehen ist, um gelenkte Räder mittels einer Lenksteuervorrichtung unter Anpassung an die Wahrnehmungscharakteristik des Menschen zu verschwenken. Durch eine Korrektur des Lenkwinkels unter Berücksichtigung des momentan am Fahrzeug erzeugten Schlupfwinkels soll der Zeitunterschied reduziert werden bis der tatsächliche Fahrzeugkurvenfahrtzustand mit dem erwarteten Kurvenfahrtzustand in Übereinstimmung gebracht worden ist.

DE 10 2005 058 200 A1 beschreibt ein Fahrzeuglenkgerät mit einem Lenkrad, einem Lenkradwinkelsensor und einer elektronischen Steuereinheit (ECU) für die Ansteuerung eines Drehantriebsmechanismus für die Vorderräder des Fahrzeugs. Die ECU besitzt eine Phasenvorlaufstufe, um eine Phasenvorlaufkomponente zu dem Lenksignal hinzuzufügen und eine Subtrahierstufe für die Applikation eines von einem Fahrzeugverhaltenssensor ausgegebenen Verhaltensgrößensignals als Rückkopplungssignal auf das Ausgangssignal der Phasenborlaufstufe.

Aus DE 198 01 974 A1, DE 10 2004 026 147 A1 und DE 10 2004 001 318 A1 sind weitere Steer-by-Wire-Lenksysteme bekannt, bei denen der Sollwert des Radlenkwinkels auf Basis einer Lenkeingabe berechnet wird, wobei die Einregelung dieses Sollwertes abhängig vom Fahrzustand unterschiedlich erfolgt.

Es ist daher die Aufgabe der vorliegenden Erfindung, ein Verfahren zur Steuerung eines Steer-by-Wire-Lenksystems und ein Steer-by-Wire-Lenksystem für ein Kraftfahrzeug anzugeben, welches das Lenkgefühl für den Fahrer verbessert.

Diese Aufgabe wird gelöst durch ein Verfahren zur Steuerung eines Steer-by-Wire-Lenksystems mit den Merkmalen des Anspruchs 1 und ein Steer-by-Wire-Lenksystem mit den Merkmalen des Anspruchs 10. Vorteilhafte Weiterbildungen ergeben sich aus den jeweiligen Unteransprüchen.

Hierdurch wird ein Verfahren zur Steuerung eines Steer-by-Wire-Lenksystems für ein Kraftfahrzeug angegeben, bei dem ein an einer Lenkwelle angeordneter Lenkwellensensor einen vom Fahrer über eine Lenkhandhabe eingegebenen Lenkwinkel erfasst und eine Steuereinheit in Abhängigkeit des erfassten Lenkwinkels einen Radlenkwinkel für einen auf zumindest ein gelenktes Rad wirkenden elektronisch geregelten Lenksteller vorgibt. Die Steuereinheit berechnet den Radlenkwinkel unter Berücksichtigung eines vorgebbaren Korrekturwinkels.

Durch die erfindungsgemäße Lösung wird das Lenksystem mit einer einstellbaren, virtuellen Lenksteifigkeit ausgestattet. Die Korrektur erfolgt derart, dass das mindestens eine gelenkte Rad einer Verstellung der Lenkhandhabe, beispielsweise einer Rotation eines Lenkrades, nacheilt. Das Lenkrad ist bei gleicher Stellung des zumindest einen gelenkten Rades somit bereits weiter verstellt, als es bei einem Steer-by-Wire-Lenksystem nach dem Stand der Technik der Fall wäre. Es wird somit ein zusätzlicher Winkelversatz eingeführt. Das Lenksystem wird dadurch mit einer virtuellen Lenksteifigkeit ausgestattet, die dem Fahrer eine Nachgiebigkeit des Lenkstrangs suggeriert, wie er dies aus konventionellen Lenksystem gewohnt ist.

Bevorzugt wird unter dem vorgebbaren Korrekturwinkel ein fester Wert oder eine Funktion verstanden. Weiter bezeichnet auch ein Wert oder eine Funktion den Begriff des vorgebbaren Korrekturwinkels, der/die mit vom Fahrer einstellbaren Parametern parametrisiert werden kann. Dadurch kann die Lenksteifigkeit so gewählt werden, dass diese unterschiedliche Werte je nach Fahrzeugtyp, beispielsweise einem Sportwagen oder einer Limousine, aufweist, oder entsprechend durch unterschiedliche Fahrmodi, wie sportlich oder komfortabel, einstellbar ist.

In einer vorteilhaften Weiterbildung erfasst der Lenkwellensensor zusätzlich ein in die Lenkwelle eingetragenes Lenkmoment und der Korrekturwinkel wird in Abhängigkeit von diesem Lenkmoment berechnet. Beispielsweise kann das Lenkmoment über einen Drehmomentensensor bestimmt werden, der mit der Lenkwelle wirkverbunden ist. Solche Drehmomentensensoren sind aus dem Stand der Technik bekannt und können beispielsweise über induktive oder magnetische Messeinrichtungen verfügen. Auch die Verwendung von Hall-Gebern ist denkbar und möglich. Diese Auflistung der zur Verwendung geeigneten Drehmomentensensoren ist nicht auf die zuvor genannte Auflistung beschränkt.

Bevorzugt wird der Korrekturwinkel über einen linearen oder nicht linearen funktionellen Zusammenhang aus dem Lenkmoment bestimmt.

Bevorzugt wirkt der elektronisch geregelte Lenksteller auf zwei gelenkte Räder.

Vorzugsweise wird der erfasste Lenkwinkel um den Korrekturwinkel verändert und dem so erhaltenen korrigierten Lenkwinkel ein Radlenkwinkel zugeordnet, der dem Lenksteller vorgegeben wird. Alternativ kann aber auch dem erfassten Lenkwinkel unmittelbar in einen zugeordneten Radlenkwinkel umgerechnet werden, der dann um den Korrekturwinkel verändert wird.

Bevorzugt kann der Lenksteller einen Elektromotor, besonders bevorzugt eine Synchronmaschine umfassen.

Gemäß einer bevorzugten Ausführungsform wird der Korrekturwinkel in Abhängigkeit von einer am Lenksteller angreifenden Last berechnet. Bei einer Zahnstangenlenkung wird die Last in Form einer Zahnstangenkraft über die Zahnstange an den Lenksteller übertragen. Die Zahnstangenkraft kann dann beispielsweise über den Motorstrom des Lenkstellers bestimmt werden, oder über einen separaten Sensor. Bevorzugt wird der Korrekturwinkel über einen linearen oder nicht linearen funktionellen Zusammenhang aus der Last bestimmt. Bei Lenksystemen welche keine Zahnstange aufweisen, wie eine Einzelradlenkung, kann die am Lenksteller angreifende Last beispielsweise ein Lastmoment oder eine Lastkraft sein, auf deren Grundlage der Korrekturwinkel berechnet wird. Die Last kann beispielsweise eine Radverschwenkungslast sein, die auf das lenkbare Rad in Radlenkwinkelrichtung wirkt.

Insbesondere kann es alternativ oder zusätzlich vorgesehen sein, dass zur Berechnung des Korrekturwinkels das Lenkmoment oder die Last mit einem wählbaren Steifigkeitskennwert multipliziert wird. Der Steifigkeitskennwert wird bevorzugt derart gewählt, dass der Korrekturwinkel einer Federsteifigkeit der Lenkwelle im Bereich von 0,5 bis 4 Nm pro Winkelgrad, besonders bevorzugt von 1 bis 3 Nm pro Winkelgrad und ganz besonders bevorzugt von 1,5 bis 2,5 Nm pro Winkelgrad entspricht. Hierdurch wird eine virtuelle Lenksteifigkeit des Lenksystems erzeugt, die in einem dem Fahrer aus konventionellen Lenksystemen gewohnten Bereich liegt.

Beispielsweise kann der Korrekturwinkel auch, also alternativ oder zusätzlich, in Abhängigkeit von einer Fahrgeschwindigkeit des Kraftfahrzeugs und/oder in Abhängigkeit von dem erfassten Lenkwinkel und/oder der Lenkwinkelgeschwindigkeit und/oder der Fahrbahnbeschaffenheit und/oder dem Fahrmodus berechnet werden. Dadurch ist es möglich, beispielsweise bei hohen Fahrgeschwindigkeiten eine höhere Nachgiebigkeit des Lenksystems einzustellen, während bei niedrigen Fahrgeschwindigkeiten eine direktere Lenkung erfolgt. Das Lenkverhalten kann so der jeweiligen Fahrsituation, wie beispielsweise Autobahnfahrt oder Parkiervorgang, angepasst werden. Denkbar ist auch, dass weitere gemessene oder geschätzte oder übermittelte Parameter, wie beispielsweise die Fahrbahnbeschaffenheit, bei der Berechnung des Korrekturwinkels Berücksichtigung finden. Durch diese Maßnahmen ist das Hysterese-Trägheitsgefühl einstellbar.

Ferner kann vorgesehen sein, den Korrekturwinkel auf ein wählbares Winkelintervall zu begrenzen. Durch die Begrenzung des Korrekturwinkels auf ein Winkelintervall kann der Effekt des in konventionellen Lenksystemen vorhandenen Überlastschutzes des Drehstabs in dem Steer-by-Wire-Lenksystem simuliert werden. Das wählbare Winkelintervall ist daher vorzugsweise begrenzt durch einen minimalen und einen maximalen Korrekturwinkel, die einem minimalen und einem maximalen Verdrillwinkel des Drehstabs entsprechen. Das Winkelintervall ist bevorzugt symmetrisch zu null gewählt. Bevorzugt ist das Winkelintervall zwischen ±6 Winkelgrad und ±18 Winkelgrad, besonders bevorzugt zwischen ±10 Winkelgrad und ±15 Winkelgrad.

Bei Steer-by-Wire Lenksystemen kann es dazu kommen, dass der Lenksteller auf Grund von schnellen und vielen Richtungswechseln, beispielsweise bei einem Befahren einer Serpentinenstraße, derart beansprucht wird, dass es zu einer ungewollten Temperaturerhöhung des Lenkstellers kommt, so dass dieser überhitzt und dieser in seiner Funktion beeinträchtigt ist. Dies nimmt der Fahrer auf Grund der nicht vorhandenen mechanischen Kopplung zwischen der Lenkhandhabe und dem zumindest einen gelenkten Rad nicht wahr oder erst dann, wenn der Lenksteller seinen Dienst versagt.

Dank der erfindungsgemäßen Lösung kann der Korrekturwinkel abhängig von einer ermittelten Temperatur des Lenkstellers derart angepasst werden, dass die Lenksteifigkeit weiter herabgesetzt wird, je höher die Temperatur ist. Bevorzugt erfolgt dies dann, wenn die Temperatur einen bestimmten Grenzwert überschreitet. Besonders bevorzugt wird der Korrekturwinkel dann derart schlagartig geändert, dass der Fahrer dies auch wahrnimmt, jedoch so, dass dieser stets das Gefühl hat, das Kraftfahrzeug zu beherrschen. Alternativ oder zusätzlich kann ein mit der Lenkwelle gekoppelter Feedback-Aktuator dem Fahrer eine verzögerte Rückmeldung geben, so dass dieses Verhalten durch den Fahrer als schwammiger und weicher (reduzierte Lenksteifigkeit) wahrgenommen wird als im normalen Fahrbetrieb. Dem Fahrer wird somit suggeriert, dass ein kritischer Zustand vorliegt und er das Kraftfahrzeug sicher außer Betrieb setzen kann. Weiters kann es vorgesehen sein, dass wenn die Temperatur des Lenkstellers einen festgesetzten Grenzwert überschreitet, eine Warnleuchte und/oder ein Warnton aktiviert wird, welche den Fahrer vor einem Überhitzen des Lenkstellers warnt und ihn damit auffordert, das Kraftfahrzeug außer Betrieb zu setzen.

Vorrichtungsmäßig wird die Aufgabe gelöst durch ein Steer-by-Wire-Lenksystem für ein Kraftfahrzeug mit einem an einer Lenkwelle angeordneten Lenkwellensensor, einem auf zumindest ein gelenktes Rad wirkenden, elektronisch regelbaren Lenksteller und einer Steuereinheit, die dazu ausgebildet ist, in Abhängigkeit eines von dem Lenkwellensensor erfassten Lenkwinkels einen Radlenkwinkel für den Lenksteller vorzugeben, wobei das Lenksystem dazu ausgebildet ist, das zuvor beschriebene erfindungsgemäße Verfahren auszuführen.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
- Fig. 1: zeigt schematisch ein Ausführungsbeispiel des erfindungsgemäßen Steer-by-Wire-Lenksystems,
- Fig. 2: zeigt schematisch den Aufbau des Lenksystems und der zugehörigen Steuereinheit gemäß dem Ausführungsbeispiel nach Fig. 1 in einem Blockschaltbild,
- Fig. 3: zeigt schematisch ein Beispiel für den Aufbau der Berechnungseinheit der Steuereinheit gemäß dem Ausführungsbeispiel nach Fig. 1 und 2,
- Fig. 4: zeigt schematisch ein Beispiel für den Aufbau der Korrekturwinkel-Bestimmungseinheit der Berechnungseinheit gemäß Fig. 3,
- Fig. 5: zeigt beispielhaft eine Kennlinie der Korrekturwinkel-Bestimmungseinheit gemäß Fig. 4.

In Figur (Fig.) 1 ist schematisch der Aufbau eines Steer-by-Wire-Lenksystems 1 für ein Kraftfahrzeug gemäß einem ersten Ausführungsbeispiel der Erfindung dargestellt. Das Steer-by-Wire-Lenksystem 1 weist eine über eine Lenkwelle 2 mit einem Feedback-Aktuator 9 verbundene Lenkhandhabe 4 in Form eines Lenkrades auf. Das Lenksystem 1 umfasst ferner einen auf zwei gelenkte Räder 6 wirkenden, elektronisch regelbaren Lenksteller 7 mit einem Steuergerät 8. Der Lenksteller 7 ist über ein Lenkgetriebe 10 mit einer Zahnstange 12 verbunden. Das Lenkgetriebe 10 kann beispielsweise ein Ritzel 11 umfassen, das mit der Zahnstange 12 in Eingriff steht. Die von dem Lenksteller 7 bewirkten Translationen der Zahnstange 12 werden über Spurstangen 13 auf die gelenkten Räder 6 übertragen, um einen Radlenkwinkel ψ einzustellen. Das Steer-by-Wire-Lenksystem 1 umfasst schließlich eine Steuereinheit 5, die den von einem Lenkwellensensor 3 erfassten Lenkwinkel ϕ der Lenkwelle 2 als Eingabegröße erhält und dem Lenksteller 7 einen zugehörigen Radlenkwinkel ψ als Ausgabegröße vorgibt. Zusätzlich kann der Lenkwellensensor 3 dazu ausgebildet sein, ein in die Lenkwelle 2 eingebrachtes Lenkmoment LM zu erfassen. Der Lenkwellensensor 3 kann entweder als separater Sensor ausgebildet oder in den Feedback-Aktuator 9 integriert sein. Der Steuereinheit 5 dient ferner dazu, Rückwirkungen der Fahrbahn, die am Lenksteller 7 als Lasten F, beispielsweise in Form einer Zahnstangenkraft, angreifen, zu erfassen und den Feedback-Aktuator 9 in Abhängigkeit dieser Lasten F so anzusteuern, dass der Fahrer die Rückwirkungen der Fahrbahn in gewohnter Weise an der Lenkhandhabe 4 verspürt.

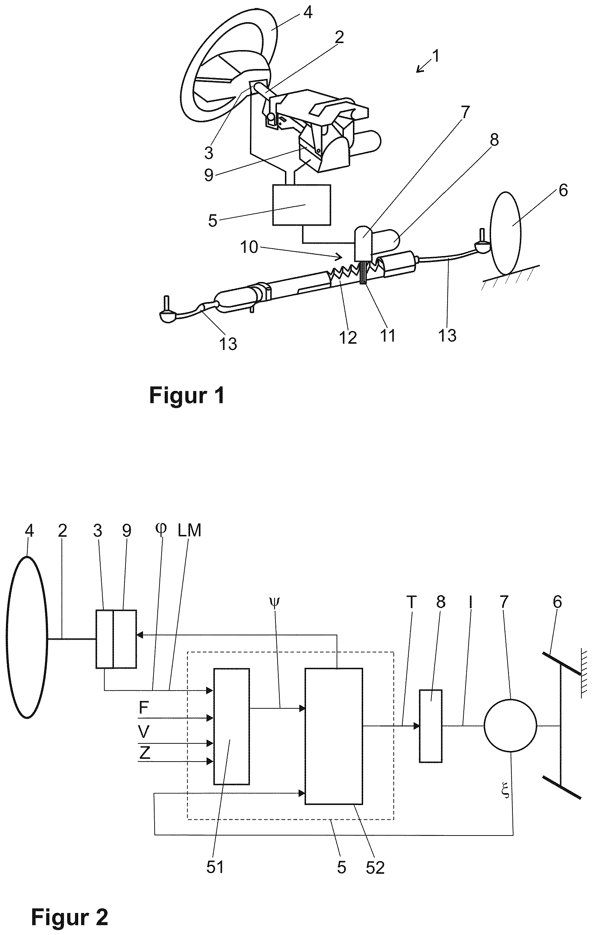

Fig. 2 zeigt den Aufbau des Steer-by-Wire-Lenksystems 1 gemäß Fig. 1 schematisch als Blockschaltbild. Die vom Fahrer an der Lenkhandhabe 4 eingegebene Lenkstellung wird über die Lenkwelle 2 an den Lenkwellensensor 3 übertragen, der den gemessenen Lenkwinkel ϕ und das gemessene Lenkmoment LM einer Berechnungseinheit 51 in der Steuereinheit 5 zuführt. Der Lenkwellensensor 3 umfasst einen Lenkwinkelsensor und einen Drehmomentensensor, die einzeln oder als eine Messeinheit ausgebildet sein können. Die Berechnungseinheit 51 hat als weitere Eingangsgrößen die an der Zahnstange 12 anliegende Last F, die Fahrzeuggeschwindigkeit v, sowie weitere den Fahrzeugzustand charakterisierende Zustandsgrößen Z. Aus diesen Eingangsgrößen berechnet die Berechnungseinheit 51 den Radlenkwinkel ψ und gibt diesen an einen Stellungsregler 52 der Steuereinheit 5 aus. Bevorzugt erfolgt die Berechnung des Radlenkwinkels ψ unter Berücksichtigung eines Korrekturwinkels χ, dessen Bestimmung bevorzugt basierend auf dem Lenkmoment LM und/oder einer Last F und/oder einer Fahrgeschwindigkeit v des Kraftfahrzeugs oder anderen Parameter, wie Fahrbahnbeschaffenheit etc., erfolgt. Diese Größen können gemessen, geschätzt oder anderweitig bestimmt oder ermittelt oder übermittelt werden.

Der Stellungsregler 52 ist dafür vorgesehen, aus dem Radlenkwinkel ψ (Soll-Wert) und einem Ist-Stellwinkel ξ ein Drehmomentanforderungssignal T für den Lenksteller 7 zu bestimmen, das geeignet ist, den Radlenkwinkel ψ an den gelenkten Rädern 6 einzustellen. Der Ist-Stellwinkel ξ kann beispielsweise über einen Rotorpositionssensor am Lenksteller 7 bestimmt werden. Alternativ kann ein gesonderter Sensor vorgesehen sein, um den Ist-Stellwinkel ξ beispielsweise in Form einer Zahnstangenposition zu erfassen. Das Drehmoment-Anforderungssignal T wird an ein Steuergerät 8 des Lenkstellers 7 ausgegeben, das dieses in zugeordnete Motorströme I umwandelt, um den Lenksteller 7 anzusteuern.

Der Stellungsregler 52 ist ferner dafür vorgesehen basierend zumindest auf dem Stellwinkel ξ und dem Radlenkwinkel ψ ein Feedback-Signal für den Feedback-Aktuator 9 auszugeben. Das Feedbacksignal kann vorzugsweise abhängig von - insbesondere proportional zu - der vorliegenden Stellungsabweichung zwischen Radlenkwinkel ψ und Stellwinkel ξ vorgegeben werden. Das Feedbacksignal kann ferner abhängig von der Last F sein.

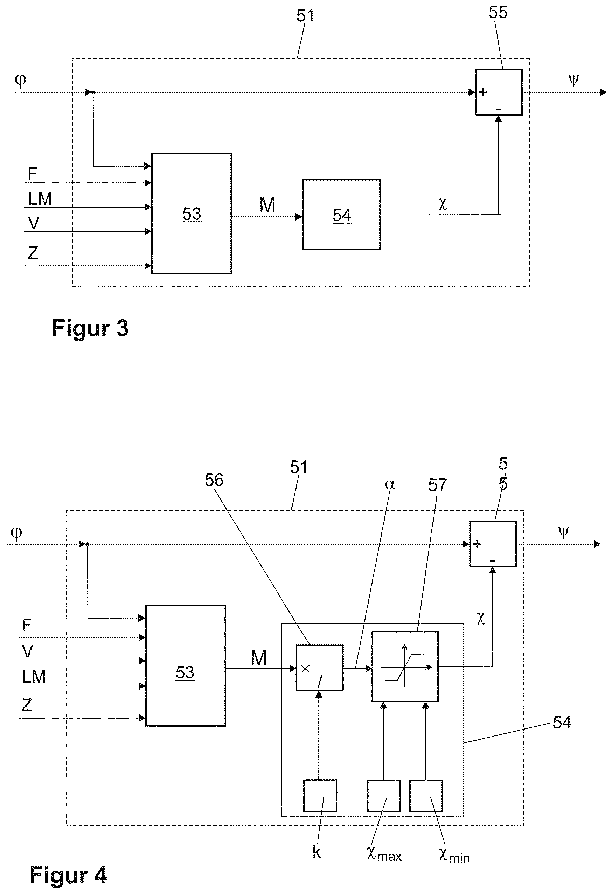

Fig. 3 zeigt beispielhaft den Aufbau der Berechnungseinheit 51 als Blockschaltbild. Der vom Lenkwellensensor 3 gemessene Lenkwinkel ϕ wird darin einem Subtrahierer 55 und einer Lenkmoment-Bestimmungseinheit 53 zugeführt. Die Lenkmoment-Bestimmungseinheit 53 erhält als weitere Eingangsgrößen das vom Lenkwellensensor 3 gemessene Lenkmoment LM, die Last F, die Fahrgeschwindigkeit v, sowie weitere Zustandsgrößen Z, die den Fahrzeugzustand charakterisieren. Auf Basis dieser Eingangsgrößen berechnet die Lenkmoment-Bestimmungseinheit 53 ein virtuelles Lenkwellendrehmoment M, das an eine Korrekturwinkel-Bestimmungseinheit 54 ausgegeben wird. Die Korrekturwinkel-Bestimmungseinheit 54 berechnet auf Basis des virtuellen Lenkwellendrehmoments M einen Korrekturwinkel χ, der dem Subtrahierer 55 zugeführt wird.

Im einfachsten Fall kann das virtuelle Lenkwellendrehmoment M gleich dem gemessenen Lenkmoment LM sein. In anderen Ausführungsformen kann das gemessene Lenkmoment LM mittels der übrigen Eingangsgrößen der Lenkmoment-Bestimmungseinheit 53 verrechnet werden zu einem virtuellen Lenkwellendrehmoment M, das der Fahrsituation angepasst ist. In weiteren Ausführungsformen wird das virtuelle Lenkwellendrehmoment M ohne Berücksichtigung des gemessenen Lenkmoments LM berechnet.

Der Subtrahierer 55 berechnet aus dem Lenkwinkel ϕ und dem Korrekturwinkel χ den Radlenkwinkel ψ. Beispielsweise wird der Differenz aus Lenkwinkel ϕ und Korrekturwinkel χ gemäß einer Zuordnungsfunktion ein zugeordneter Radlenkwinkel ψ zugeordnet. Alternativ kann aber auch zunächst dem Lenkwinkel ϕ ein vorläufiger Radlenkwinkel zugeordnet werden, der dann durch Abzug des Korrekturwinkels χ zu dem Radlenkwinkel ψ korrigiert wird.

In Fig. 4 ist beispielhaft der Aufbau der Berechnungseinheit 51 mit einer detaillierteren Darstellung der Korrekturwinkel-Bestimmungseinheit 54 als Blockschaltbild gezeigt. Fig. 4 zeigt eine bevorzugte Ausführungsform, bei der basierend auf der Last F und/oder der Fahrzeuggeschwindigkeit v ein virtuelles Lenkwellendrehmoment M bestimmt wird, welches mittels einem Steifigkeitskennwert k in einen vorläufigen Korrekturwinkel α umgerechnet wird. Der Steifigkeitskennwert k kann abhängig von Lenkmoment LM, Lenkwinkel ϕ, Lenkwinkelgeschwindigkeit, Fahrzeuggeschwindigkeit, gewählt werden, beispielsweise durch eine Funktion, in der die genannten Größen als Eingangswert dienen. Je nach Ausführung kann der Steifigkeitskennwert k auch in einem Kennfeld dargestellt werden, oder abhängig der Zustände mit Verstärkungsfaktoren beaufschlagt werden. Dazu wird in der Korrekturwinkel-Bestimmungseinheit 54 das virtuelle Lenkwellendrehmoment M in einem Multiplizierer 56 mit dem Steifigkeitskennwert k multipliziert. Das virtuelle Lenkwellendrehmoment M ist vorzugsweise proportional zur Last F, so dass in diesem Fall zur Berechnung des Korrekturwinkels χ die Last F oder das Lenkmoment LM mit einem wählbaren Steifigkeitskennwert k multipliziert wird. Der Steifigkeitskennwert ist vorzugsweise so gewählt, dass die resultierende virtuelle Lenksteifigkeit einer Federsteifigkeit der Lenkwelle 2 im Bereich von 0,5 bis 4 Nm pro Winkelgrad entspricht. Dies entspricht der gängigen Federsteifigkeit eines realen Drehstabs.

Bei einer realen Drehstabanordnung wäre der Winkel α der Verdrillwinkel. Bei einer realen Drehstabanordnung ist der Verdrillwinkel durch einen Überlastschutz begrenzt. Es ist daher bevorzugt vorgesehen, den vorläufigen Korrekturwinkel α anschließend in einem Begrenzer 57 auf ein wählbares Winkelintervall zu begrenzen. Sofern der vorläufige Korrekturwinkel α innerhalb dieses Intervalls liegt, ist der Korrekturwinkel χ gleich dem vorläufigen Korrekturwinkel α*.* Soweit der vorläufige Korrekturwinkel α außerhalb des Winkelintervalls liegt, wird der Korrekturwinkel χ auf einen minimalen Korrekturwinkel χmin bzw. einen maximalen Korrekturwinkel χmax festgesetzt. Der solchermaßen begrenzte Korrekturwinkel wird als Korrekturwinkel χ an den Subtrahierer 55 ausgegeben.

Im Übrigen gelten die Ausführungen zu Fig. 3 entsprechend.

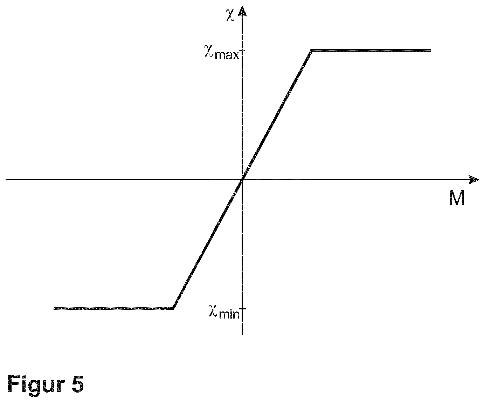

Fig. 5 zeigt schematisch die Kennlinie der Korrekturwinkel-Bestimmungseinheit 54 gemäß Fig. 4. In einem zentralen Drehmomentbereich wird dem virtuellen Lenkwellendrehmoment M gemäß einem linearen Zusammenhang ein Korrekturwinkel χ zugeordnet. Der Steifigkeitskennwert k bildet dabei die Proportionalitätskonstante. Bei virtuellen Drehmomenten M außerhalb des Winkelintervalls des Begrenzers 57 wird der Korrekturwinkel χ auf den minimalen bzw. den maximalen zulässigen Korrekturwinkel χmin, χmax begrenzt. Wie in Fig. 5 gezeigt ist das Winkelintervall vorzugsweise symmetrisch um null gewählt.

Bei der Berechnung des Korrekturwinkels χ sind abweichend von dem in den Fig. 1 bis 5 dargestellten Ausführungsbeispiel viele Varianten denkbar. Beispielsweise kann auf den Begrenzer 57 verzichtet werden. Auch kann in einer vereinfachten Ausführungsform der Korrekturwinkel χ als Konstante vorgegeben werden, oder ausschließlich als zu der Last F oder dem Lenkmoment LM proportionale Größe berechnet werden. Schließlich ist es denkbar, dass das virtuelle Lenkwellendrehmoment M in Abhängigkeit von der Last F berechnet wird und die übrigen Zustandsgrößen Z, Fahrgeschwindigkeit v und/oder Lenkwinkel ϕ in die Berechnung eines der Fahrsituation angepassten Steifigkeitskennwertes k eingehen. Auch der minimale und/oder der maximale zulässige Korrekturwinkel χmin, χmax kann in Abhängigkeit der übrigen Zustandsgrößen Z, der Fahrgeschwindigkeit v und/oder des Lenkwinkels ϕ und/oder dem Lenkmoment LM vorgegeben werden. Schließlich können auch auf Basis einzelner Zustandsgrößen Z, v, ϕ Teilsteifigkeiten berechnet werden, die zu einem Gesamt-Korrekturwinkel aufaddiert werden.

### Bezugszeichenliste

- 1: Steer-by-Wire-Lenksystem
- 2: Lenkwelle
- 3: Lenkwellensensor
- 4: Lenkhandhabe
- 5: Steuereinheit
- 6: gelenkte Räder
- 7: Lenksteller
- 8: Steuergerät
- 9: Feedback-Aktuator
- 10: Lenkgetriebe
- 11: Ritzel
- 12: Zahnstange
- 13: Spurstange
- 51: Berechnungseinheit
- 52: Stellungsregler
- 53: Lenkmoment-Bestimmungseinheit
- 54: Korrekturwinkel-Bestimmungseinheit
- 55: Subtrahierer
- 56: Multiplizierer
- 57: Begrenzer
- ϕ: Lenkwinkel
- χ: Korrekturwinkel
- ψ: Radlenkwinkel
- α: vorläufiger Korrekturwinkel
- χmin: minimaler Korrekturwinkel
- χmax: maximaler Korrekturwinkel
- ξ: Ist-Stellwinkel
- F: Last
- M: virtuelles Lenkwellendrehmoment
- v: Fahrgeschwindigkeit
- k: Steifigkeitskennwert
- T: Drehmomentanforderungssignal
- I: Motorströme
- LM: Lenkmoment
- Z: Zustandsgröße

## Patentansprüche

1. Verfahren zur Steuerung eines Steer-by-Wire-Lenksystems (1) für ein Kraftfahrzeug, bei dem ein an einer Lenkwelle (2) angeordneter Lenkwellensensor (3) einen vom Fahrer über eine Lenkhandhabe (4) eingegebenen Lenkwinkel (ϕ) erfasst und eine Steuereinheit (5) in Abhängigkeit des erfassten Lenkwinkels (cp) einen Radlenkwinkel (ψ) für einen auf zumindest ein gelenktes Rad (6) wirkenden elektronisch geregelten Lenksteller (7) vorgibt, wobei die Steuereinheit (5) den Radlenkwinkel (ψ) unter Berücksichtigung eines vorgebbaren Korrekturwinkels (χ) berechnet, **dadurch gekennzeichnet, dass** die Korrektur derart erfolgt, dass das mindestens eine gelenkte Rad (6) einer Verstellung der Lenkhandhabe (4) nacheilt, um das Steer-by-Wire-Lenksystem (1) mit einer einstellbaren virtuellen Lenksteifigkeit auszustatten.

2. Verfahren nach Anspruch 1, **dadurch gekennzeichnet, dass** der Lenkwellensensor (3) zusätzlich ein in die Lenkwelle (2) eingetragenes Lenkmoment (LM) erfasst und der Korrekturwinkel (χ) in Abhängigkeit von dem Lenkmoment (LM) berechnet wird.

3. Verfahren nach Anspruch 1 oder 2, **dadurch gekennzeichnet, dass** der Korrekturwinkel (χ) in Abhängigkeit von einer am Lenksteller (7) angreifenden Last (F) berechnet wird.

4. Verfahren nach Anspruch 2, **dadurch gekennzeichnet, dass** zur Berechnung des Korrekturwinkels (χ) das Lenkmoment (LM) mit einem wählbaren Steifigkeitskennwert (k) multipliziert wird.

5. Verfahren nach Anspruch 3, **dadurch gekennzeichnet, dass** zur Berechnung des Korrekturwinkels (χ) die Last (F) mit einem wählbaren Steifigkeitskennwert (k) multipliziert wird.

6. Verfahren nach Anspruch 4 oder 5, **dadurch gekennzeichnet, dass** der Steifigkeitskennwert (k) derart gewählt wird, dass der Korrekturwinkel (χ) einer Federsteifigkeit der Lenkwelle (2) im Bereich von 0,5 bis 4 Nm pro Winkelgrad entspricht.

7. Verfahren nach einem der Ansprüche 1 bis 6, **dadurch gekennzeichnet, dass** der Korrekturwinkel (χ) in Abhängigkeit von einer Fahrgeschwindigkeit (v) des Kraftfahrzeugs berechnet wird.

8. Verfahren nach einem der Ansprüche 1 bis 7, **dadurch gekennzeichnet, dass** der Korrekturwinkel (χ) in Abhängigkeit von dem erfassten Lenkwinkel (ϕ) berechnet wird.

9. Verfahren nach einem der Ansprüche 1 bis 8, **dadurch gekennzeichnet, dass** der Korrekturwinkel (χ) auf ein wählbares Winkelintervall begrenzt wird.

10. Steer-by-Wire-Lenksystem für ein Kraftfahrzeug mit einem an einer Lenkwelle (2) angeordneten Lenkwellensensor (3), einem auf zumindest ein gelenktes Rad (6) wirkenden, elektronisch regelbaren Lenksteller (7) und einer Steuereinheit (5), die dazu ausgebildet ist, in Abhängigkeit eines von dem Lenkwellensensor (3) erfassten Lenkwinkels (ϕ) einen Radlenkwinkel (ψ) für den Lenksteller (7) vorzugeben, **dadurch gekennzeichnet, dass** das Lenksystem (1) dazu ausgebildet ist, das Verfahren nach einem der Ansprüche 1 bis 9 auszuführen.

## Claims

1. Method for controlling a steer-by-wire steering system (1) for a motor vehicle, in which a steering shaft sensor (3) arranged on a steering shaft (2) detects a steering angle (ϕ) entered by the driver via a steering handle (4) and a control unit (5) specifies a wheel steering angle (ψ) for an electronically controlled steering actuator (7) acting on at least one steered wheel (6) as a function of the detected steering angle (ϕ), wherein the control unit (5) calculates the wheel steering angle (ψ) taking into account a predeterminable correction angle (χ), **characterized in that** the correction takes place in such a way that the at least one steered wheel (6) follows an adjustment of the steering handle (4) in order to provide the steer-by-wire steering system (1) with an adjustable virtual steering stiffness.

2. Method according to claim 1, **characterized in that** the steering shaft sensor (3) additionally detects a steering torque (LM) entered into the steering shaft (2) and the correction angle (χ) is calculated as a function of the steering torque (LM).

3. Method according to claim 1 or 2, **characterized in that** the correction angle (χ) is calculated as a function of a load (F) acting on the steering actuator (7).

4. Method according to claim 2, **characterized in that** the steering torque (LM) is multiplied by a selectable stiffness parameter (k) to calculate the correction angle (χ).

5. Method according to claim 3, **characterized in that** the load (F) is multiplied by a selectable stiffness parameter (k) to calculate the correction angle (χ).

6. Method according to claim 4 or 5, **characterized in that** the stiffness parameter (k) is selected in such a way that the correction angle (χ) corresponds to a spring stiffness of the steering shaft (2) in the range from 0.5 to 4 Nm per degree of angle.

7. Method according to any one of claims 1 to 6, **characterized in that** the correction angle (χ) is calculated as a function of a driving speed (v) of the motor vehicle.

8. Method according to any one of claims 1 to 7, **characterized in that** the correction angle (x) is calculated as a function of the detected steering angle (ϕ).

9. Method according to any one of claims 1 to 8, **characterized in that** the correction angle (χ) is limited to a selectable angle interval.

10. Steer-by-wire steering system for a motor vehicle with a steering shaft sensor (3) arranged on a steering shaft (2), an electronically controllable steering actuator (7) acting on at least one steered wheel (6) and a control unit (5) which is configured to specify a wheel steering angle (ψ) for the steering actuator (7) as a function of a steering angle (ϕ) detected by the steering shaft sensor (3), **characterized in that** the steering system (1) is configured to carry out the method according to any one of claims 1 to 9.

## Revendications

1. Procédé de commande d'un système de direction Steer-by-Wire (1) pour un véhicule automobile, dans lequel un capteur d'arbre de direction (3) disposé sur un arbre de direction (2) détecte un angle de direction (ϕ) entré par le conducteur par l'intermédiaire d'une manette de direction (4) et une unité de commande (5) prédéfinit, en fonction de l'angle de direction détecté (ϕ), un angle de direction de roue (ψ) pour un actionneur de direction (7) à régulation électronique agissant sur au moins une roue dirigée (6), l'unité de commande (5) calculant l'angle de direction de roue (ψ) en tenant compte d'un angle de correction (χ) pouvant être prédéfini, **caractérisé en ce que** la correction s'effectue de telle sorte que l'au moins une roue dirigée (6) suit un réglage de la manette de direction (4) afin de doter le système de direction Steer-by-Wire (1) d'une rigidité de direction virtuelle réglable.

2. Procédé selon la revendication 1, **caractérisé en ce que** le capteur d'arbre de direction (3) détecte en outre un couple de direction (LM) inscrit dans l'arbre de direction (2) et l'angle de correction (χ) est calculé en fonction du couple de direction (LM).

3. Procédé selon la revendication 1 ou 2, **caractérisé en ce que** l'angle de correction (χ) est calculé en fonction d'une charge (F) appliquée à l'actionneur de direction (7).

4. Procédé selon la revendication 2, **caractérisé en ce que,** pour calculer l'angle de correction (χ), le couple de direction (LM) est multiplié par une valeur caractéristique de rigidité (k) pouvant être sélectionnée.

5. Procédé selon la revendication 3, **caractérisé en ce que,** pour calculer l'angle de correction (x), la charge (F) est multipliée par une valeur caractéristique de rigidité (k) pouvant être sélectionnée.

6. Procédé selon la revendication 4 ou 5, **caractérisé en ce que** la valeur caractéristique de rigidité (k) est choisie de telle sorte que l'angle de correction (x) corresponde à une rigidité de ressort de l'arbre de direction (2) dans la plage de 0,5 à 4 Nm par degré d'angle.

7. Procédé selon l'une des revendications 1 à 6, **caractérisé en ce que** l'angle de correction (x) est calculé en fonction d'une vitesse de déplacement (v) du véhicule automobile.

8. Procédé selon l'une des revendications 1 à 7, **caractérisé en ce que** l'angle de correction (χ) est calculé en fonction de l'angle de braquage détecté (ϕ).

9. Procédé selon l'une des revendications 1 à 8, **caractérisé en ce que** l'angle de correction (x) est limité à un intervalle angulaire sélectionnable.

10. Système de direction Steer-by-Wire pour un véhicule automobile, comprenant un capteur d'arbre de direction (3) disposé sur un arbre de direction (2), un actionneur de direction (7) réglable électroniquement, agissant sur au moins une roue directrice (6), et une unité de commande (5) qui est configuré pour prédéfinir un angle de direction de roue (ψ) pour l'actionneur de direction (7) en fonction d'un angle de direction (ϕ) détecté par le capteur d'arbre de direction (3), **caractérisé en ce que** le système de direction (1) est configuré pour mettre en oeuvre le procédé selon l'une des revendications 1 à 9.
